# EUROPÄISCHE PATENTSCHRIFT

(11) **EP 0 582 096 B1**
(45) Veröffentlichungstag und Bekanntmachung des Hinweises auf die Patenterteilung: **05.06.1996**
(21) Anmeldenummer: 93110774.2
(22) Anmeldetag: 06.07.1993
(51) Int. Cl.: B60R 22/46, B60R 22/28

(54) **Gurtaufroller mit einem an der Gurtspule angreifenden Gurtstraffer**
Belt retractor with a tensioner operating on the belt spool
Enrouleur de sangle comportant un tendem agissant sur la bobine d'enroulement

(30) Priorität: 13.07.1992 DE 4222993
(43) Veröffentlichungstag der Anmeldung: 09.02.1994
(73) Patentinhaber: TRW Occupant Restraint Systems GmbH, D-73553 Alfdorf (DE)
(72) Erfinder: Mödinger, Thomas, D-73553 Alfdorf-Vordersteinenberg (DE); Schmid, Johannes, D-73527 Schwäbisch Gmünd-Hussenhofen (DE)
(74) Vertreter: Degwert, Hartmut, Dipl.-Phys.

(56) Entgegenhaltungen:
- DE-A- 3 040 667
- DE-A- 3 220 498
- FR-A- 2 303 570
- FR-A- 2 387 664
- GB-A- 2 191 933
- US-A- 3 386 683
- PATENT ABSTRACTS OF JAPAN vol. 15, no. 186 (M-1112)14. Mai 1991 & JP-A-03 045 446 (TAKATA KK) 27. Februar 1991

## Beschreibung

Die Erfindung betrifft einen Gurtaufroller für Fahrzeug-Sicherheitsgurte, mit einem an der Gurtspule angreifenden Gurtstraffer, der einen Linearantrieb aufweist, sowie einer die Linearbewegung des Linearantriebs in eine Drehbewegung umsetzenden Übertragungseinrichtung, die über ein ins Schnelle übersetzendes Zahnradgetriebe triebschlüssig mit der Gurtspule kuppelbar ist, wobei auf die Übertragungseinrichtung ein erstes Zahnrad und ein mit diesem in Kämmeingriff stehendes zweites Zahnrad folgt, und einem Gurtspulen-Sperrmechanismus.

Ein solcher Gurtaufroller ist aus der GB-A-2 191 933 bekannt. Das erste Zahnrad ist drehbar auf einer Schwinge gelagert. Das zweite Zahnrad ist drehfest mit der Gurtspule ausgebildet. Im Ruhezustand ist der erste Zahnrad mittels einer Scherverbindung drehfest an der Schwinge festgelegt. Mittels einer weiteren Scherverbindung ist die Schwinge so an dem Gehäuse des Gurtaufrollers festgelegt, daß sich das zweite Zahnrad frei von dem ersten drehen kann. Bei der Aktivierung des Linearantriebes wird zuerst die Scherverbindung zwischen der Schwinge und dem Gehäuse aufgehoben, so daß das erste Zahnrad mit dem zweiten gekuppelt wird. Danach wird die Scherverbindung zwischen dem ersten Zahnrad und der Schwinge aufgehoben, so daß das zweite Zahnrad von dem ersten angetrieben werden kann. Bei dieser Ausführungsform muß unbedingt gewährleistet werden, daß zuerst das erste und das zweite Zahnrad miteinander gekuppelt werden, bevor das erste Zahnrad in Drehung versetzt wird, da sonst ein korrekter Eingriff zwischen den beiden Zahnrädern nicht gewährleistet ist. Dieses Erfordernis führt zu einem hohen Bauaufwand.

Aus der US-A-3 386 683 ist eine Vorrichtung bekannt, die im Gefahrenfall überschüssiges Gurtband in einem Sicherheitsgurtsystem aufwickeln soll. Die Vorrichtung besteht aus einem Gasgenerator, dessen nach seiner Zündung bereitgestelltes Gas eine Zahnstange beaufschlagt, die über ein Übersetzungsgetriebe eine Gurtspule in der Aufwickelrichtung beaufschlagt.

Ferner sind in der DE 31 31 637 A1 mehrere Ausführungen einer Baugruppe aus Gurtaufroller und Gurtstraffer beschrieben. Bei Aktivierung des Gurtstraffers wird die Bewegung des Kolbens in dem pyrotechnischen Kolben/Zylinder-Linearantrieb über ein Zugseil auf eine Seilscheibe übertragen, an deren Umfang das Zugseil angreift. Diese Seilscheibe wird sodann durch den über das Zugseil ausgeübten Zug in Drehung versetzt und zu Beginn ihrer Drehbewegung triebschlüssig an die Gurtspule angekoppelt. Das Zugseil und die Seilscheibe bilden eine den Hub des Kolbens in eine Drehbewegung der Gurtspule umsetzende Übertragungseinrichtung. Durch die Drehung der Gurtspule erfolgt die Straffung des Gurtbandes.

Nachteilig bei allen diesen Gurtaufrollern ist, daß nach erfolgter Straffung des Gurtbandes kein kontrolliertes Abziehen von Gurtband von der Gurtspule möglich ist.

Aufgabe der Erfindung ist es, einen Gurtaufroller der eingangs genannten Art dahingehend weiterzubilden, daß das zweite Zahnrad zu Beginn der Straffung in einfacher Weise mit der Gurtspule gekuppelt werden kann und daß nach erfolgter Straffung des Gurtbandes ein kontrolliertes Abziehen von Gurtband von der Gurtspule unter im Gurtband auftretender Zugbeanspruchung möglich ist.

Diese Aufgabe wird bei einem Gurtaufroller der eingangs angegebenen Art erfindungsgemäß dadurch gelöst, daß das zweite Zahnrad über eine Freilaufkupplung mit der Gurtspule kuppelbar ist, daß der Sperrmechanismus inaktiviert ist, wenn die Übertragungseinrichtung durch den Linearantrieb angetrieben wird, und daß das erste Zahnrad über eine weitere Freilaufkupplung mit einem am Gehäuse des Aufrollers abgestützten Sperrelement kuppelbar ist. Die Freilaufkupplung des zweiten Zahnrades gewährleistet eine besonders einfache und zuverlässige Kuppelung dieses Zahnrades mit der Gurtspule. Die Freilaufkupplung des ersten Zahnrades ermöglicht, bei einer Drehung der Gurtspule in der Gurtbandabwickelrichtung eine Verbindung zwischen der Gurtspule und dem Sperrelement auszubilden, durch die eine solche Drehung der Gurtspule gehemmt wird. In Abhängigkeit von der Ausgestaltung des Sperrelementes kann die Charakteristik der Kennlinie von Gurtbandabzugskraft über abgezogener Gurtbandlänge in gewünschter Weise eingestellt werden. Gleichzeitig wird mit der Straffung des Gurtbandes der Sperrmechanismus der Gurtspule inaktiviert, so daß eine Drehung der Gurtspule in der Gurtbandabwickelrichtung nicht von dem Sperrmechanismus behindert wird.

Gemäß einer bevorzugten Ausführungsform der Erfindung ist vorgesehen, daß das Sperrelement ein Ende eines Torsionsstabes ist, dessen anderes Ende drehfest am Gehäuse abgestützt ist. Durch diese Ausgestaltung des Sperrelementes können in besonders vorteilhafter Weise hohe Beanspruchungen im Gurtband abgebaut werden, die bei einem Fahrzeugaufprall nach erfolgter Gurtstraffung durch eine Vorverlagerung des Fahrzeuginsassen auftreten können. Zur Minderung des Verletzungsrisikos ist es erwünscht, diese Beanspruchungen zu begrenzen und Beanspruchungsspitzen durch Energiewandlung abzubauen. Um dies zu erreichen, muß das Gurtband von der Gurtspule entgegen einer definierten Haltekraft abgezogen werden können. Wenn nach erfolgter Gurtstraffung eine hohe Zuglast im Gurtband auftritt, wird die Gurtspule in Gurtabzugsrichtung gedreht, und ihre Drehbewegung wird über das zweite Zahnrad auf das erste Zahnrad übertragen, welches aber über die Freilaufkupplung drehfest an das erste Ende des Torsionstabes angekoppelt ist. Da dessen zweites Ende drehfest am Aufrollergehäuse abgestützt ist, tritt bei weiterer Drehung der Gurtspule in Gurtabzugsrichtung eine Torsion des Torsionsstabes auf. Durch die nun erfolgende plastische Verformung des Torsionsstabes werden die Beanspruchungen im Gurtband begrenzt und Energiespitzen durch Energiewandlung abgebaut. Das Verletzungsrisiko für den Fahrzeuginsassen wird durch diese Ausgestaltung der Gurtaufroller/Gurtstraffer/Energiewandler-Kombination erheblich reduziert.

Eine einfache Übertragungseinrichtung ist durch eine Seilscheibe und ein an ihrem Umfang angreifendes, mit dem Linearantrieb verbundenes Zugseil gebildet. Besonders geringe Verluste weist eine Übertragungseinrichtung auf, die durch eine mit dem Linearantrieb verbundene Zahnstange und ein mit der Zahnstange in Kämmeingriff stehendes Ritzel gebildet ist.

Der Linearantrieb kann beispielsweise durch einen Kolben/Zylinderantrieb gebildet sein, der einen Zylinder, einen Kolben und einen pyrotechnischen Gasgenerator aufweist. Eine besonders günstige Bauform des Linearantriebs ergibt sich, wenn gemäß der bevorzugten Ausführungsform die auf Schub beanspruchbar ausgebildete Zahnstange starr mit dem Kolben verbunden und parallel zum Boden des im Querschnitt allgemein U-förmigen Gehäuses verschiebbar geführt ist.

Weitere Merkmale und Vorteile der Erfindung ergeben sich aus der folgenden Beschreibung zweier bevorzugter Ausführungsformen und aus der Zeichnung, auf die Bezug genommen wird.

In der Zeichnung zeigen:
Fig. 1 eine schematische Seitenansicht einer aus Gurtaufroller und Gurtstraffer bestehenden Baugruppe gemäß einer ersten Ausführungsform der Erfindung, in die auch ein Energiewandler zur Begrenzung der Beanspruchungen im Gurtsystem integriert ist;
Fig. 2 schematisch eine Draufsicht der in Fig. 1 gezeigten Ausführung;
Fig. 3 eine schematische Querschnittsansicht der in den Figuren 1 und 2 gezeigten Ausführung;
Fig. 4 eine schematische Seitenansicht einer aus Gurtaufroller und Gurtstraffer bestehenden Baugruppe gemäß einer zweiten Ausführungsform der Erfindung; und
Fig. 5 eine schematische Schnittansicht der in Fig. 4 gezeigten Ausführungsform ohne Gurtspule.

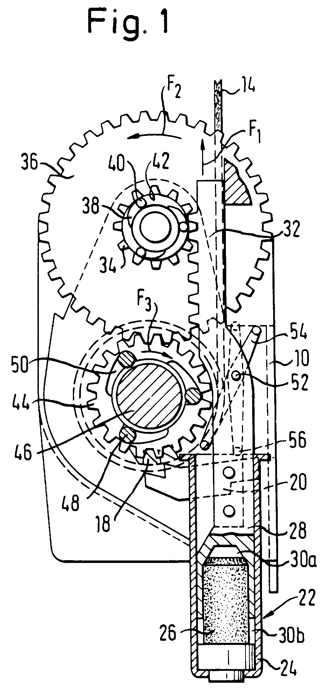

In einem lasttragenden, im Querschnitt allgemein U-förmigen Aufrollergehäuse 10 ist eine Gurtspule 12 drehbar gelagert. Das auf der Gurtspule 12 aufgewickelte Gurtband 14 tritt aus dem Gurtaufroller parallel zum Boden des Aufrollergehäuses 10 aus. Der Gurtaufroller ist mit einem Sperrmechanismus versehen, dessen herkömmlich ausgebildetes und daher nicht näher beschriebenes Ansteuersystem in einem Gehäusedeckel 16 auf der einen Seite des Aufrollergehäuses 10 untergebracht ist. Der Sperrmechanismus besteht aus einer an den Flanschen der Gurtspule 12 angebrachten Sperrverzahnung, von der in Fig. 1 zwei Zähne 18 zu erkennen sind, und wengistens einer schwenkbar am Aufrollergehäuse 10 lasttragend gelagerten Sperrklinke 20, die zum Zusammenwirken mit der Sperrverzahnung am Gurtspulenflansch ausgebildet ist.

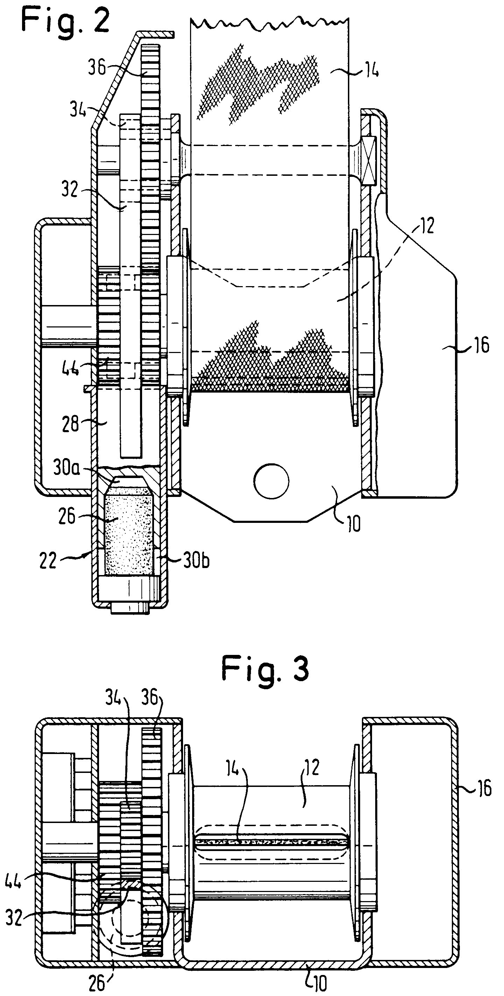

Gemäß den Fig. 1 bis 3 ist auf der dem Gehäusedeckel gegenüberliegenden Seite und am Boden des Aufrollergehäuses 10 ein pyrotechnischer Kolben/Zylinder-Linearantrieb angeordnet, der allgemein mit 22 bezeichnet ist. Er besteht aus einem aus dem Aufrollergehäuse 10 teilweise herausragenden Zylinder 24, einem in dessen freies Ende eingesetzten pyrotechnischen Gasgenerator 26 und einem verschiebbar in Zylinder 24 aufgenommenen Kolben 28. Der Kolben 28 ist becherförmig ausgebildet und über den zylindrischen Gasgenerator 26 gestülpt, wobei zwei Arbeitskammern 30a, 30b gebildet werden.

Mit dem Kolben 28 ist eine Zahnstange 32 starr verbunden. Die Zahnstange 32 ist parallel zum Boden des Aufrollergehäuses 10 verschiebbar geführt. Die Verzahnung der Zahnstange 32 steht bei dem in Fig. 1 gezeigten Ruhezustand mit einem Ritzel 34 in Kämmeingriff, das mit einem Zahnrad 36 größeren Durchmessers fest verbunden ist. Die durch das in die Zahnstange 32 eingreifende Ritzel 34 gebildete, die Linearbewegung des Kolbens 28 in eine Drehbewegung umsetzende Übertragungseinrichtung ist über das Zahnrad 36 drehbar am ersten axialen Ende eines Torsionstabes 38 gelagert, dessen gegenüberliegendes Ende in der benachbarten Seitenwand des Aufrollergehäuses 10 drehfest verankert ist. Das Zahnrad 36 ist durch eine Freilaufkupplung in Form eines Wälzkörper-Klemmgesperres mit Wälzkörpern 40 an das benachbarte Ende des Torsionsstabes 38 ankuppelbar. Die vorzugsweise walzenförmigen Wälzkörper 40 sind in Ausnehmungen am Außenumfang des benachbarten Endes des Torsionsstabes 38 aufgenommen, welche jeweils durch eine Rampenfläche 42 begrenzt werden.

Das Zahnrad 36 steht in Kämmeingriff mit einem weiteren Zahnrad 44 kleineren Durchmessers. Dieses Zahnrad 44 ist auf dem Außenumfang eines axialen Kupplungsfortsatzes 46 der Gurtspule 12 drehbar gelagert. Zwischen dem Zahnrad 44 und dem Kupplungsfortsatz 46 ist eine Freilaufkupplung angeordnet, die durch ein Wälzkörper-Klemmgesperre mit walzenförmigen Wälzkörpern 48 gebildet ist. Die Wälzkörper 48 sind in durch Rampenflächen begrenzten Ausnehmungen 50 des Zahnrades 44 aufgenommen.

Die Zahnstange 32 ist zwischen zwei Extremstellungen verschiebbar, in denen ihre Verzahnung außer Eingriff mit den Zähnen des Ritzels 34 steht. Durch die Zahnstange 32 ist ein um einen Lagerstift 52 am Aufrollergehäuse 10 schwenkbar gelagerter Hebel 54 zwischen einer ersten, in Fig. 1 mit durchgezogenen Linien gezeigten Stellung und einer mit gestrichelten Linien gezeigten Stellung verschwenkbar. Im Ruhezustand (durchgezogene Linien) nimmt der Hebel 54 eine zur Zahnstange 32 schräge Stellung ein. Durch Vorschieben der Zahnstange 32 aus der in Fig. 1 gezeigten Ruhestellung wird der Hebel 54 in eine Stellung parallel zur Zahnstange 32 verschwenkt und greift mit einem an seinem Ende befestigten Nocken 56 über die Sperrklinke 20, wodurch diese daran gehindert wird, mit den Zähnen 18 der Sperrverzahnung an der Gurtspule 12 in Eingriff zu gelangen.

Bei Aktivierung des Gasgenerators 26 durch ein (nicht gezeigtes) Ansteuersystem werden die Arbeitskammern 30a, 30b mit Druckgas beaufschlagt, und der Kolben 28 wird im Zylinder 24 vorgeschoben, wobei auch die Zahnstange 32 vorgeschoben wird. Die mit dem Ritzel 34 kämmende Zahnstange 32 versetzt dieses Ritzel nunmehr in eine Drehbewegung, wodurch auch das Zahnrad 36 in Drehung versetzt wird. Die Vorschubbewegung der Zahnstange 32 ist in Fig. 1 durch einen Pfeil F₁ gekennzeichnet. Die durch die Vorschubbewegung der Zahnstange 32 verursachte Drehbewegung des Zahnrades 36 ist durch einen Pfeil F₂ verdeutlicht. Die zwischen dem Torsionsstab 38 und dem Zahnrad 36 eingefügte Freilaufkupplung läßt die Drehung in Richtung des Pfeiles F₂ zu, sperrt aber im entgegengesetzten Drehsinn.

Durch die Drehung des Zahnrades 36 wird auch das mit diesem kämmende Zahnrad 44 in Drehung versetzt. Die entsprechende Drehrichtung ist in Fig. 1 durch einen Pfeil F₃ angegeben. Bei Drehung des Zahnrades 44 in Richtung dieses Pfeiles F₃ sperrt die zwischen dem Zahnrad 44 und dem Kupplungsfortsatz 46 angeordnete Freilaufkupplung, so daß die Drehung des Zahnrades 44 auf den Kupplungsfortsatz 46 übertragen wird. Die Gurtspule 12 wird nun in Drehung versetzt, wobei Gurtband 14 aufgerollt und die Gurtlose aus dem Sicherheitsgurtsystem entfernt wird. Da das Zahnrad 36 einen wesentlich größeren Durchmesser als das Zahnrad 44 aufweist, wird die Vorschubbewegung der Zahnstange 32 durch ein ins Schnelle übersetzendes Zahnradgetriebe in einen großen Drehwinkel der Gurtspule 12 umgesetzt. Dieses Zahnradgetriebe ist mit geringen Verlusten behaftet, so daß die durch den pyrotechnischen Gasgenerator 26 zur Verfügung gestellte Antriebsenergie gut ausgenutzt wird.

Wenn nach erfolgter Gurtstraffung eine hohe Zugbeanspruchung im Gurtband 14 auftritt, ist die Gurtspule 12 bestrebt, eine Drehung in Gurtabzugsrichtung auszuführen. Die relative Drehrichtung zwischen dem Kupplungsfortsatz 46 und dem Zahnrad 44 ist hierbei gegenüber dem Vorgang der Gurtstraffung unverändert, so daß die Freilaufkupplung gesperrt bleibt. Die nun erfolgende Drehung des Zahnrades 44 entgegensetzt zu der mit F₃ bezeichneten Drehrichtung wird auf das Zahnrad 36 übertragen, wobei nunmehr die Freilaufkupplung zwischen diesem Zahnrad 36 und dem benachbarten Ende des Torsionsstabes 38 sperrt, so daß sich der Torsionsstab der Drehung des Zahnrades 36 widersetzt. Unter einer ein vorbestimmtes Maß überschreitenden Beanspruchung erfährt jedoch der Torsionsstab 38 eine Torsionsverformung, wobei plastische Verformungsarbeit geleistet wird. Der Torsionsstab 38 bildet daher einen Energiewandler, durch den die Beanspruchungen im Gurtband begrenzt und Beanspruchungsspitzen abgebaut werden. Je nach der beim Vorgang der Gurtstraffung zu überwindenden Gegenkraft aus dem Gurtsystem kann die Zahnstange 32 bis in ihre Extremstellung vorgeschoben werden, in welcher sie außer Eingriff mit dem Ritzel 34 steht, oder bereits vor dieser Extremstellung angehalten werden. In letzterem Fall wird die Zahnstange 32 während der Drehung des Zahnrades 36 durch das mit diesem verbundene Ritzel 34 zurückgeschoben, bis sie ihre entgegengesetzte Extremstellung erreicht hat, in welcher ihre Verzahnung außer Eingriff mit dem Ritzel 34 steht. Die Drehung des Zahnrades 36 bei gleichzeitiger plastischer Verformung des Torsionsstabes 38 wird daher nicht durch die Zahnstange 32 behindert, die nicht unbegrenzt bezüglich des Aufrollergehäuses 10 verschoben werden kann. Der Hebel 54 verbleibt nach der Aktivierung des Gurtstraffers in seiner verschwenkten Stellung, in welcher er die Sperrklinke 20 außer Eingriff mit den Zähnen 18 der Sperrverzahnung an der Gurtspule 12 hält.

Bei einer alternativen Ausführungsform entfällt der Torsionsstab 38, wenn keine Energiewandlung erwünscht ist. Das Zahnrad 36 ist dann mittels der Wälzkörper 40 an ein starr am Aufrollergehäuse 10 verankertes Sperrelement ankoppelbar, das in gleicher Weise wie das in der Zeichnung dargestellte Ende des Torsionsstabes 38 ausgebildet sein kann. Nach erfolgter Gurtstraffung bleibt die Sperrklinke 20 in jedem Falle deaktiviert, da zu diesem Zeitpunkt eine plötzliche Umkehrung des Drehsinns der Gurtspule auftritt und diese mit einer so großen Drehbeschleunigung angetrieben werden kann, daß ein sicheres Einrücken der Sperrklinke nicht gewährleistet wäre.

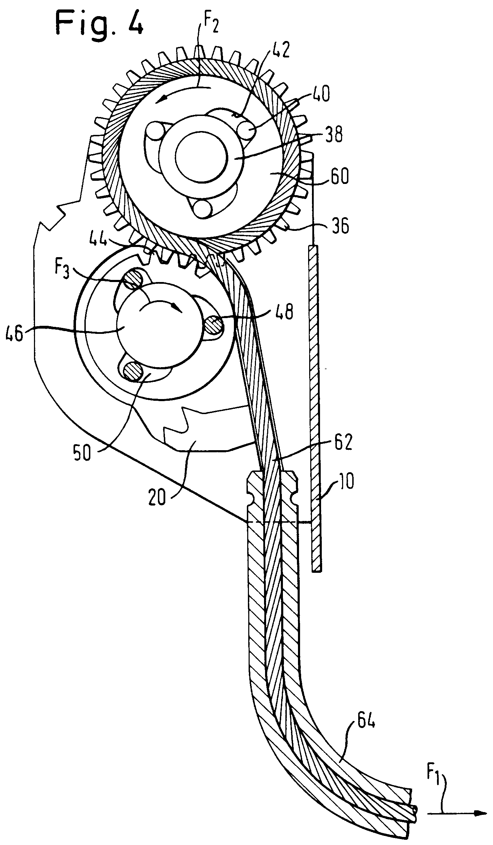

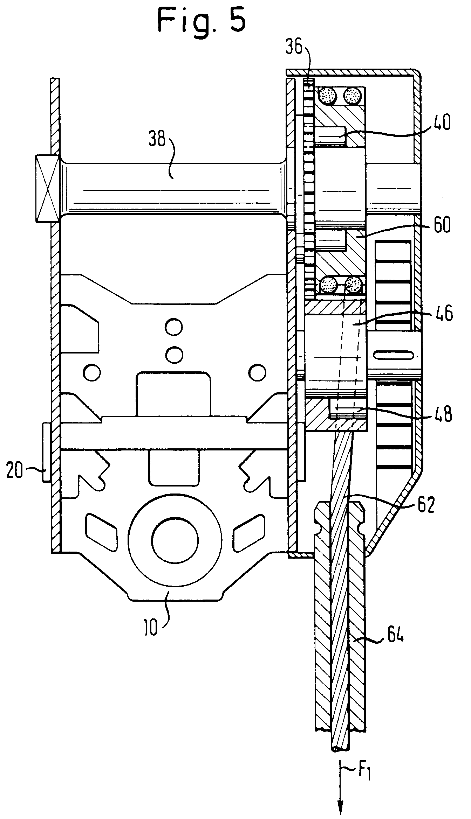

In den Fig. 4 und 5 ist eine weitere Ausführungsform eines Gurtaufrollers mit Gurtstraffer dargestellt. Sie unterscheidet sich von der ersten anhand der von Fig. 1 bis 3 dargestellten Ausführungsform dadurch, daß nicht das Ritzel 34 und die Zahnstange 32 die Übertragungseinrichtung bilden, sondern eine Seilscheibe 60 und ein an ihrem Umfang angreifendes Zugseil 62. Weiterhin ist der hier nicht dargestellte Linearantrieb nicht am Aufrollergehäuse 10 angeordnet. Der Linearantrieb kann aus einem entfernt angeordneten Kolben/Zylinderantrieb mit Gasgenerator bestehen oder aber über ein Zugseil von der Relativbewegung eines Fahrzeugaggregats zum Fahrzeugaufbau bei einem Aufprall des Fahrzeugs abgeleitet sein. Das Zugseil 62 ist über einen Bowdenzug an den Linearantrieb angeschlossen.

Die Sperrklinke 20 kann in analoger Weise zu der ersten Ausführungsform oder z.B. durch ein an das Zugseil 62 angeschlossenes Steuerteil (nicht gezeigt) in einer inaktiven Stellung gehalten werden. Ansonsten ist die zweite Ausführungsform entsprechend der ersten Ausführungsform ausgebildet.

## Patentansprüche

1. Gurtaufroller für Fahrzeug-Sicherheitsgurte, mit einem an der Gurtspule (12) angreifenden Gurtstraffer, der einen Linearantrieb (22) aufweist, sowie einer die Linearbewegung des Linearantriebs (22) in eine Drehbewegung umsetzenden Übertragungseinrichtung (32, 34; 60, 62), die über ein ins Schnelle übersetzendes Zahnradgetriebe (36, 44) triebschlüssig mit der Gurtspule (12) kuppelbar ist,
wobei auf die Übertragungseinrichtung (32, 34; 60, 62) ein erstes Zahnrad (36) und ein mit diesem in Kämmeingriff stehendes zweites Zahnrad (44) folgt,
und einem Gurtspulen-Sperrmechanismus (18, 20),
**dadurch gekennzeichnet**,
daß das zweite Zahnrad (44) über eine Freilaufkupplung (48, 50) mit der Gurtspule (12) kuppelbar ist,
daß der Sperrmechanismus (18, 20) inaktiviert ist, wenn die Übertragungseinrichtung (32, 34; 60, 62) durch den Linearantrieb angetrieben wird,
und daß das erste Zahnrad (36) über eine weitere Freilaufkupplung (40, 42) mit einem am Gehäuse (10) des Aufrollers abgestützten Sperrelement (38) kuppelbar ist.

2. Gurtaufroller nach Anspruch 1, **dadurch gekennzeichnet**, daß das Sperrelement ein Ende eines Torsionsstabes (38) ist, dessen anderes Ende drehfest am Gehäuse (10) abgestützt ist.

3. Gurtaufroller nach einem der Ansprüche 1 und 2, **dadurch gekennzeichnet**, daß der Gurtspulen-Sperrmechanismus eine drehfest an die Gurtspule (12) angeschlossene Sperrverzahnung (18) und wenigstens eine mit dieser zusammenwirkende Sperrklinke (20) aufweist, und daß die Sperrklinke (20) durch einen am Gehäuse (10) schwenkbar gelagerten Hebel (54), der durch die Übertragungseinrichtung (32, 34; 60, 62) verschwenkbar ist, in einer inaktivierten Stellung außer Eingriff mit der Sperrverzahnung (18) gehalten wird, wenn die Übertragungseinrichtung (32, 34; 60, 62) durch den Linearantrieb (22) angetrieben wird.

4. Gurtaufroller nach einem der Ansprüche 1 bis 3, **dadurch gekennzeichnet**, daß die Übertragungseinrichtung durch eine mit dem ersten Zahnrad (36) drehfest verbundene Seilscheibe (60) und ein am Umfang der Seilscheibe (60) angreifendes, mit dem Linearantrieb (22) verbundenes Zugseil (62) gebildet ist.

5. Gurtaufroller nach einem der Ansprüche 1 bis 3, **dadurch gekennzeichnet**, daß die Übertragungseinrichtung durch eine mit dem Linearantrieb (22) verbundene Zahnstange (32) und ein mit der Zahnstange (32) in Kämmeingriff stehendes Ritzel (34) gebildet ist, welches mit dem ersten Zahnrad (36) drehfest verbunden ist.

6. Gurtaufroller nach Anspruch 5, **dadurch gekennzeichnet**, daß die Zahnstange (32) im Ruhezustand des Gurtstraffers an ihrem freien Ende mit dem Ritzel (34) in Kämmeingriff steht und zwischen zwei Extremstellungen verschiebbar ist, in denen ihre Verzahnung außer Eingriff mit dem Ritzel (34) steht.

7. Gurtaufroller nach einem der vorhergehenden Ansprüche, **dadurch gekennzeichnet**, daß der Linearantrieb durch einen Kolben/Zylinderantrieb (22) gebildet ist, der einen Zylinder (24), einen Kolben (28) und einen pyrotechnischen Gasgenerator (26) aufweist.

8. Gurtaufroller nach Anspruch 7, **dadurch gekennzeichnet**, daß der Kolben (28) mit einem zylindrischen Hohlraum versehen ist, der sich entlang der Längsachse des Kolbens (28) erstreckt und in dem der Gasgenerator (26) angeordnet ist.

9. Gurtaufroller nach den Ansprüchen 5 und 7 oder 5, 6 und 7, **dadurch gekennzeichnet**, daß der Zylinder (24) am Gehäuse (10) abgestützt ist und die auf Schub beanspruchbar ausgebildete Zahnstange (32) starr mit dem Kolben (28) verbunden sowie parallel zum Boden des im Querschnitt allgemein U-förmigen Gehäuses (10) verschiebbar geführt ist.

10. Gurtaufroller nach einem der vorhergehenden Ansprüche, **dadurch gekennzeichnet**, daß die zwischen der Gurtspule (12) und dem zweiten Zahnrad (44) angeordnete Freilaufkupplung durch ein Wälzkörper-Klemmgesperre (48, 50) gebildet ist.

11. Gurtaufroller nach einem der vorhergehenden Ansprüche, **dadurch gekennzeichnet**, daß die zwischen dem ersten Zahnrad (36) und dem Torsionsstab (38) angeordnete Freilaufkupplung durch ein Wälzkörper-Klemmgesperre (40, 42) gebildet ist.

## Claims

1. A belt retractor for vehicle safety belts, comprising a belt pretensioner acting on the belt drum (12) and having a linear drive (22), and a transmitting device (32, 34; 60, 62) which transforms the linear motion of the linear drive (22) into a rotational motion and which is able to be coupled drivingly to the belt drum (12) via a step-up gear transmission (36, 44),
wherein the transmitting device (32, 34; 60, 62) is followed by a first gear wheel (36) and a second gear wheel (44) meshing with the first gear wheel,
and a blocking mechanism (18, 20) for the belt drum,
characterized in that
the second gear wheel (44) is able to be coupled to the belt drum (12) via a freewheel coupling (48, 50),
in that the blocking mechanism (18, 20) is inactivated when the transmitting device (32, 34; 60, 62) is driven by the linear drive,
and in that the first gear wheel (36) is able to be coupled by means of a further freewheel coupling (40, 42) to a locking element (38) which bears on the housing (10) of the retractor.

2. The belt retractor according to claim 1, characterized in that the locking element is formed by one end of a torsion rod (38), the other end of which is supported non-rotatably at the housing (10).

3. The belt retractor according to either one of claims 1 and 2, characterized in that the blocking mechanism for the belt drum comprises a locking toothing (18) fixed non-rotatably to the belt drum (12) and at least one locking pawl (20) cooperating with the locking toothing, and in that the locking pawl (20) is held in an inactivated position out of engagement with the locking toothing (18) by means of a lever (54) which is pivotably mounted at the housing (10) and which is able to be pivoted by the transmitting device (32, 34; 60, 62), said locking pawl being held in the inactivated position when the transmitting device (32, 34; 60, 62) is driven by the linear drive (22).

4. The belt retractor according to any one of claims 1 to 3, characterized in that the transmitting device is formed by a pulley (60) connected non-rotatably to the first gear wheel (36), and a pulling cable (62) which engages at the circumference of the pulley (60) and is connected to the linear drive (22).

5. The belt retractor according to any one of claims 1 to 3, characterized in that the transmitting device is formed by a rack (32) connected to the linear drive (22), and a pinion (34) meshing with the rack (32) and being connected non-rotatably with the first gear wheel (36).

6. The belt retractor according to claim 5, characterized in that the rack (32) has its free end in mesh with the pinion (34) in the neutral position of the belt pretensioner and is able to be shifted between two extreme positions in which its teeth are out of engagement with the pinion (34).

7. The belt retractor according to any one of the preceding claims, characterized in that the linear drive is formed by a piston and cylinder drive (22) which comprises a cylinder (24), a piston (28), and a pyrotechnical gas generator (26).

8. The belt retractor according to claim 7, characterized in that the piston (28) is provided with a cylindrical cavity which extends along the longitudinal axis of the piston (28) and in which the gas generator (26) is arranged.

9. The belt retractor according to claims 5 and 7 or claims 5, 6 and 7, characterized in that the cylinder (24) bears on the housing (10) and in that the rack (32) which is able to be loaded with trust is rigidly connected to the piston (28) and is guided displaceably in parallel to the bottom of the housing (10) which is formed with a generally U-shaped cross section.

10. The belt retractor according to any one of the preceding claims, characterized in that the freewheel coupling arranged between the belt drum (12) and the second gear wheel (44) is formed by a silent ratchet (48, 50) with roller bodies.

11. The belt retractor according to any one of the preceding claims, characterized in that the freewheel coupling arranged between the first gear wheel (36) and the torsion rod (38) is formed by a silent ratchet (40, 42) with roller bodies.

## Revendications

1. Enrouleur de ceinture pour ceintures de sécurité de véhicules automobiles comportant un tendeur agissant sur la bobine de la ceinture (12), qui comprend un entraînement linéaire (22), ainsi qu'un dispositif de transmission (32, 34; 60, 62), convertissant le déplacement linéaire de l'entraînement linéaire (22) en un mouvement de rotation, dispositif qui peut être accouplé avec la bobine de la ceinture de sécurité (12) au moyen d'un engrenage multiplicateur (36, 44), en formant une liaison motrice, une première roue dentée (36) et une seconde roue dentée (44), engrenant avec la première, faisant suite au dispositif de transmission (32, 34; 60, 62), et avec un mécanisme de blocage de bobine de ceinture (18, 20), enrouleur de ceinture caractérisé en ce que:
la seconde roue dentée (44) peut être accouplée avec la bobine (12) de la ceinture au moyen d'un accouplement à roue libre (48, 50),
le mécanisme de blocage (18, 20) n'est pas activé, quand le dispositif de transmission (32, 34; 60, 62) est entraîné par le mécanisme d'entraînement linéaire,
et la première roue dentée (36) peut être accouplée au moyen d'un autre accouplement à roue libre (40, 42) avec un élément de blocage (38) prenant appui sur le boîtier (10) de l'enrouleur.

2. Enrouleur de ceinture selon la revendication 1, carractérisé en ce que l'élément de blocage est une extrémité d'une barre de torsion (38), dont l'autre extrémité prend appui de façon solidaire sur le boîtier (10).

3. Enrouleur de ceinture selon l'une des revendications 1 et 2, caractérisé en ce que le mécanisme de blocage de la bobine de la ceinture présente une denture de blocage (18) raccordée de façon solidaire à la bobine (12) de la ceinture et au moins un cliquet de blocage (20) coopérant avec celle-ci et en ce que le cliquet de blocage (20) est maintenu dans une position désactivée, en étant désengagé de la denture de blocage (18), au moyen d'un levier (54) monté de façon, à pouvoir pivoter sur le boîtier (10), qui peut pivoter par l'intermédiaire du dispositif de transmission (32, 34; 60, 62), lorsque le dispositf de transmission (32, 34; 60, 62) est entraîné par le mécanisme d'entraînement linéaire (22).

4. Enrouleur de ceinture selon l'une des revendications 1 à 3, caractérisé en ce que le dispositif de transmission est constitué par une poulie (60), reliée de façon solidaire en rotation à la première roue dentée (36), et par un câble de traction (62), qui vient en prise sur le pourtour de la poulie (60), et est relié au mécanisme d'entraînement linéaire (22).

5. Enrouleur de ceinture selon l'une des revendications 1 à 3, caractérisé en ce que le dispositif de transmission est constitué par une crémaillère (32), qui est reliée au mécanisme d'entraînement linéaire (22), et par un pignon (34) qui engrène avec la crémaillère (32), pignon qui est relié de façon solidaire en rotation à la première roue dentée (36).

6. Enrouleur de ceinture selon la revendication 5, caractérisé en ce que la crémaillère (32), quand le tendeur de la ceinture est en position de repos, vient en prise à son extrémité libre avec le pignon (34) et peut coulisser entre deux positions extrêmes, dans lesquelles sa denture n'est plus en prise avec le pignon (34).

7. Enrouleur de ceinture selon l'une des revendications précédentes, caractérisé en ce que le mécanisme d'entraînement linéaire est formé par un mécanisme d'entraînement (22) à piston et cylindre, qui présente un cylindre (24), un piston (28) et un générateur pyrotechnique de gaz (26).

8. Enrouleur de ceinture selon la revendication 7, caractérisé en ce que le piston (28) est pourvu d'un espace creux cylindrique, qui s'étend le long de l'axe longitudinal du piston (28) et dans lequel est disposé le générateur de gaz (26).

9. Enrouleur de ceinture selon les revendications 5 et 7 ou 5, 6 et 7, caractérisé en ce que le cylindre (24) prend appui sur le boîtier (10) et en ce que la crémaillère (32), constituée de façon à pouvoir être actionnée en poussée, est reliée rigidement au piston (28) et est guidée de façon à pouvoir coulisser parallèlement au fond du boîtier (10) ayant en section transversale la forme générale d'un U.

10. Enrouleur de ceinture selon l'une des revendications précédentes, caractérisé en ce que l'on constitue un accouplement à roue libre, disposé entre la bobine (12) de la ceinture et la seconde roue dentée (44) au moyen d'un dispositif d'encliquetage par serrage à corps de roulement (48, 50).

11. Enrouleur de ceinture selon l'une des revendications précédentes, caractérisé en ce que l'accouplement à roue libre, disposé entre la première roue dentée (36) et la barre de torsion (38), est constitué par un dispositif d'encliquetage par serrage à corps de roulement (40, 42).
